# EUROPÄISCHE PATENTSCHRIFT

(11) **EP 1 080 956 B1**
(45) Veröffentlichungstag und Bekanntmachung des Hinweises auf die Patenterteilung: **27.11.2002**
(21) Anmeldenummer: 00119169.1
(22) Anmeldetag: 05.09.2000
(51) Int. Cl.: B60H 1/00, G01K 13/02, G01F 1/68, G05D 27/02

(54) **Vorrichtung zur Ermittlung der Temperatur und der Geschwindigkeit der aus einer Luftauslassöffnung in den Innenraum eines Fahrzeuges strömenden Luft**
Device for estimating the temperature and the velocity of the air flowing from an air outlet into the interior of a vehicle
Dispositif pour évaluer la température et la vitesse de l'air sortant d'une sortie d'air dans l'habitacle d'un véhicule

(30) Priorität: 06.09.1999 DE 19942328
(43) Veröffentlichungstag der Anmeldung: 07.03.2001
(73) Patentinhaber: Behr-Hella Thermocontrol GmbH, D-70469 Stuttgart (DE)
(72) Erfinder: Knittel, Otto, 59494 Soest (DE); Trapp, Ralph, 33102 Paderborn (DE); Hamann, Marwin, 59555 Lippstadt (DE); Decius, Andreas, 59558 Lippstadt (DE); Gremme, Johannes, 59555 Lippstadt (DE)
(74) Vertreter: Hilleringmann, Jochen, Dipl.-Ing.

(56) Entgegenhaltungen:
- DE-A- 3 510 648
- DE-A- 19 742 106

## Beschreibung

Die Erfindung betrifft eine Vorrichtung zur Ermittlung der Temperatur und der Geschwindigkeit der aus einer Luftauslassöffnung in den Innenraum eines Fahrzeuges strömenden Luft, wie in DE 3510648 gezeigt.

Herkömmlicherweise arbeiten Fahrzeug-Klimaanlagen dergestalt, dass ein Regler in Abhängigkeit von der Differenz zwischen der eingestellten Solltemperatur und der Isttemperatur für den Innenraum des Fahrzeuges diverse Stellglieder ansteuert, die den Durchsatz, die Verteilung und die Temperatur der in den Fahrzeuginnenraum einströmenden Luft beeinflussen. Bei diesen Stellgliedern handelt es sich zumeist um Klappen, die im Luftströmungskanalsystem der Klimaanlage angeordnet sind. Ein Problem hierbei ist, dass die Stellglieder über eine Lageregelung verfügen müssen, die ein Rückmeldepotentiometer mit entsprechender Verdrahtung erforderlich machen. Neben diesen Rückmeldepotentiometern bedarf es auch zusätzlich noch diverser Kennfelder zur Spezifizierung der Klappenposition in Abhängigkeit von den gewünschten Änderungen der Luftströmung und Lufttemperatur. Auf all dies könnte verzichtet werden, wenn der Durchsatz und die Temperatur der aus den Luftauslassöffnungen ausströmenden und in den Fahrzeuginnenraum gelangenden Luft messtechnisch erfasst werden. Dann nämlich ist auch ohne Lagekontrolle und Rückmeldepotentiometer der Innenraumtemperatur-Regelkreis geschlossen.

Es ist bekannt, zur Verbesserung der Reaktionszeit eines Innenraumtemperatur-Regelkreises in diesem einen unterlagerten Ausblastemperatur-Regelkreis vorzusehen. Ein derartiger Ausblastemperatur-Regelkreis macht einen sogenannten Ausblastemperatursensor erforderlich, der in mindestens einer der Luftauslassöffnungen angeordnet ist. Bevorzugt existiert pro Gruppe von Luftauslassöffnungen (Defrost-, Mannanström- und Fußraumauslassöffnung) jeweils eine Luftauslassöffnung, die mit einem derartigen Ausblastemperatursensor versehen ist. Jetzt ist es lediglich noch erforderlich, in den betreffenden Luftauslassöffnungen zusätzlich auch einen Strömungsmesser anzuordnen. Dies jedoch erfordert zusätzlichen Verdrahtungsaufwand, was die Einsparungen im Hinblick auf den Wegfall der Lageendkontrolle und der Rückmeldepotentiometer der Stellglieder teilweise wieder aufzehrt.

Der Erfindung liegt daher die Aufgabe zugrunde, eine Vorrichtung zur Ermittlung der Temperatur und der Geschwindigkeit der aus einer Luftauslassöffnung in den Innenraum eines Fahrzeuges strömenden Luft zu schaffen, die als Zweipol-Sensoreinheit ausgebildet ist und damit keinen gegenüber Klimaanlagen mit Auslasstemperatursensoren erhöhten Verdrahtungsaufwand aufweist.

Zur Lösung dieser Aufgabe wird mit der Erfindung eine Vorrichtung vorgeschlagen, die versehen ist mit
- mindestens einem in der Luftauslassöffnung angeordneten Temperatursensor zur Ermittlung der Temperatur der Luft,
- mindestens einem in der Luftauslassöffnung angeordneten Strömungssensor zur Ermittlung der Strömungsgeschwindigkeit der Luft,
- einer Steuer- und Auswerteeinheit, die mit dem mindestens einen Temperatursensor und dem mindestens einen Strömungssensor verbunden ist und diese während eines Messintervalls ansteuert sowie deren Messsignale auswertet, und
- einem elektronischen Umschaltelement, das ab einer bauteilspezifischen Durchbruchspannung reversibel aus einem im wesentlichen nichtleitenden Zustand in einen im wesentlichen leitenden Zustand übergeht, wobei
- das Umschaltelement in Reihe mit dem mindestens einen Strömungssensor geschaltet ist,
- parallel zu dieser Reihenschaltung oder parallel zu dem Umschaltelement der mindestens ein Temperatursensor als Sensorschaltung geschaltet ist,
- die Steuer- und Auswerteschaltung diese Sensorschaltung mit über die Dauer eines Messintervalls sich verändernder elektrischer Energie versorgt und die über der Sensorschaltung abfallende Spannung und/oder den durch die Sensorschaltung fließenden Strom zu mindestens zwei Messzeitpunkten ermittelt, wobei mindestens ein Messzeitpunkt innerhalb eines ersten Teils des Messzeitintervalls, in dem die über dem Umschaltelement abfallende Spannung kleiner als die Durchbruchsspannung ist, und mindestens ein Messzeitpunkt innerhalb eines zweiten Teils des Messzeitintervalls liegt, in dem die über dem Umschaltelement abfallende Spannung größer ist als die Durchbruchspannung, und
- die Steuer- und Auswerteeinheit anhand der zu den mindestens zwei Messzeitpunkten vorliegenden Werten für den Spannungsabfall und/oder den Strom ein die Temperatur der Luft repräsentierendes erstes Signal und ein die Geschwindigkeit der Luft repräsentierendes zweites Signal erzeugt.

Eine mit einer derartigen Vorrichtung versehene Fahrzeug-Klimaanlage ist erfindungsgemäß versehen mit
- einem Strömungskanalsystem, das ein Gebläse und mindestens eine Lufteinlassöffnung zum Ansaugen von Luft sowie mehrere Luftauslassöffnungen zum Ausblasen von Luft in den Innenraum des Fahrzeuges aufweist,
- einer Luft-Temperiereinheit mit einem ersten Stellglied zur Beeinflussung der Temperatur der durch das Strömungskanalsystem strömenden Luft,
- einer Luftverteilereinheit mit mindestens einem zweiten Stellglied zur Beeinflussung der Verteilung der durch das Strömungskanalsystem strömenden Luft auf mehrere Gruppen von Luftauslassöffnungen, wobei jede Gruppe mindestens eine Luftauslassöffnung aufweist,
- einem Temperatursensor zur Ermittlung der Temperatur im Innenraum des Fahrzeuges,
- einer Auswerte- und Steuereinheit, die mit dem Innenraum-Temperaturfühler und positionsrückmeldungsfrei mit den ersten und zweiten Stellgliedern verbunden ist,
- einer Vorrichtung zur Ermittlung der Temperatur und der Geschwindigkeit der aus den Auslassöffnungen strömende Luft, wobei
- die Vorrichtung für jede Gruppe von Auslassöffnungen mindestens eine Sensoreinheit mit aus einem in einer der Auslassöffnung angeordneten Temperatursensor zur Ermittlung der Temperatur und einen ebenfalls in der Auslassöffnung angeordneten Strömungssensor zur Ermittlung der Geschwindigkeit der aus der betreffenden Auslassöffnung strömenden Luft aufweist und
- die Sensoreinheiten mit der Auswerte- und Steuereinheit verbunden sind,
- wobei jede Sensoreinheit
   - ein elektronisches Umschaltelement aufweist, das ab einer bauteilspezifischen Durchbruchspannung reversibel aus einem im wesentlichen nichtleitenden Zustand in einen im wesentlichen leitenden Zustand übergeht,
   - das Umschaltelement in Reihe mit dem mindestens einen Strömungssensor geschaltet ist und
   - parallel zu dieser Reihenschaltung oder parallel zu dem Umschaltelement der mindestens eine Temperatursensor. als Sensorschaltung geschaltet ist, und
   - wobei die Steuer- und Auswerteschaltung jede Sensorschaltung mit über die Dauer eines Messintervalls sich verändernder elektrischer Energie versorgt und die über der Sensorschaltung abfallende Spannung und/oder den durch die Sensorschaltung fließenden Strom zu mindestens zwei Messzeitpunkten ermittelt, wobei mindestens ein Messzeitpunkt innerhalb eines ersten Teils des Messzeitintervalls, in dem die über dem Umschaltelement abfallende Spannung kleiner als die Durchbruchspannung ist, und mindestens ein Messzeitpunkt innerhalb eines zweiten Teils des Messzeitintervalls liegt, in dem die über dem Umschaltelement abfallende Spannung größer ist als die Durchbruchspannung, und
   - die Steuer- und Auswerteeinheit anhand der zu den mindestens zwei Messzeitpunkten vorliegenden Werten für den Spannungsabfall und/oder den Strom ein die Temperatur der Luft repräsentierendes erstes Signal und ein die Geschwindigkeit der Luft repräsentierendes zweites Signal erzeugt.

Die erfindungsgemäße Vorrichtung weist zwei Sensoren auf, von denen der eine Sensor die Temperatur und der andere die Strömungsgeschwindigkeit der in den Fahrgastraum einströmenden Luft messtechnisch erfasst. Pro Luftauslassöffnung können auch mehrere Temperatursensoren und mehrere Strömungssensoren angeordnet sein, um über dem Querschnitt der Luftauslassöffnung gemittelte Werte für die Luft- und die Strömungsgeschwindigkeit zu ermitteln. Ohne besondere zusätzliche schaltungstechnische Maßnahmen würden, da sich die Sensorschaltung aus Temperatursensor und Strömungssensor wie eine zweipolige Baueinheit verhalten soll, stets beide Sensoren gleichermaßen betrieben. Um jedoch während eines Messintervalls über die beiden Verbindungsleitungen zeitlich getrennte die Lufttemperatur repräsentierende und die Strömungsgeschwindigkeit der Luft repräsentierende Messsignale zu erhalten, ist es nach der Erfindung vorgesehen, in der Sensorschaltung ein elektronisches Umschaltelement einzubinden, das ab einer bauteilspezifischen Durchbruchspannung reversibel aus einem im wesentlichen nicht leitenden Zustand in einen im wesentlichen leitenden Zustand übergeht. Bei diesem Umschaltelement handelt es sich insbesondere um eine Diode und vorzugsweise um eine Zenerdiode oder um einen als Diode geschalteten Transistor, dessen Basis und Kollektor bzw. Gate und Drain miteinander verbunden sind. Vorzugsweise werden mehrere solcher Dioden bzw. Transistoren in Reihe geschaltet.

Das Umschaltelement ist mit einem der beiden Sensoren, vorzugsweise dem Strömungssensor in Reihe geschaltet, während parallel zu dieser Reihenschaltung oder parallel zu dem Umschaltelement der mindestens eine andere Sensor geschaltet ist. Durch diese Art der Verschaltung kann die Sensoreinheit in zwei Betriebszuständen betrieben werden. In dem ersten Betriebszustand, wenn nämlich die über dem Umschaltelement abfallende Spannung kleiner ist als die Durchbruchspannung, wird der Zweig der Sensorschaltung, in dem sich das Umschaltelement befindet, nicht vom Strom durchflossen, während in dem anderen Betriebszustand, in dem der Spannungsabfall über dem Umschaltelement größer ist als dessen Durchbruchspannung, das Umschaltelement stromdurchflossen wird, was dazu führt, dass entweder beide Zweige der Sensorschaltung, in denen sich die Sensoren befinden, von Strom durchflossen werden oder derjenige Sensor, der parallel zum Umschaltelement geschaltet ist, im wesentlich nicht von Strom durchflossen wird. Die beiden zuvor genannten Betriebszustände werden über die Steuer- und Auswerteschaltung, die die Sensorschaltung mit elektrischer Energie versorgt, also insbesondere die Betriebsspannung an diese Sensorschaltung anlegt, beeinflusst. Damit existiert also eine Abhängigkeit zwischen den beiden Betriebszuständen und den jeweils anliegenden Versorgungsbetriebsspannungen. Wird diese Versorgungsbetriebsspannung innerhalb eines Messintervalls variiert, so kann man zu unterschiedlichen Zeitpunkten des Intervalls einerseits Informationen über die Temperatur und andererseits über die Strömungsgeschwindigkeit der durch die Luftauslassöffnung ausströmenden Luft erlangen. Es werden also zwei Messgrößen geliefert, wobei die gesamte Sensorschaltung über lediglich zwei Verbindungsleitungen mit der Steuer- und Auswerteeinheit verbunden ist.

Um zu erzielen, dass in den beiden Mess-Teilintervallen im wesentlichen jeweils einer der beiden Sensoren mit elektrischer Energie versorgt wird, ist es von Vorteil, wenn derjenige Sensor, der parallel zum Umschaltelement geschaltet ist, einen wesentlich größeren elektrischen Widerstand aufweist, als derjenige Sensor, der in Reihe zum Umschaltelement geschaltet ist. Bei sich im leitenden Zustand befindenden Umschaltelement fließt nämlich dann der dem Zweipol-Bauelement (Sensorschaltung) zugeführte Strom nahezu vollständig über den Sensor mit dem geringeren Widerstand, während im anderen Fall, das heißt bei sperrendem Umschaltelement, der Versorgungsstrom über den Sensor mit dem höheren elektrischen Widerstand (und gegebenenfalls auch durch den anderen Sensor) fließt. In jedem Fall wird es durch einen um so größeren Unterschied in den elektrischen Widerständen der beiden Sensoren um so leichter, aus den in den beiden Mess-Teilintervallen abgreifbaren Messsignalen einerseits auf die Lufttemperatur und andererseits auf die Strömungsgeschwindigkeit zu schließen.

Vorteilhafterweise werden als Sensoren jeweils NTC-Widerstandselemente eingesetzt. Grundsätzlich eignen sich auch PTC-Widerstandselemente, wobei jedoch zu beachten ist, dass NTC-Widerstandselemente in dem hier interessierenden Temperaturbereich (0 bis 80 Grad) über die günstigere Kennlinie verfügen.

Die erfindungsgemäß vorgesehenen passiven Sensoren für die Temperatur und die Strömungsgeschwindigkeit der Luft sind zweckmäßigerweise in einer Brückenschaltung verschaltet. Diese Brückenschaltung weist drei Brückenwiderstände auf, wobei der vierte Brückenwiderstand durch die Sensorschaltung selbst repräsentiert ist. Die Steuer- und Auswerteeinheit misst jeweils die Brückenquerspannung, um dann in den beiden Zuständen, in denen die Steuer- und Auswerteeinheit die Messbrücke betreibt, anhand des Spannungsabfalls über der Sensorschaltung, die die Luftströmung und Lufttemperatur repräsentierenden Messsignale zu erhalten. Da im Falle der Verwendung eines temperaturabhängigen Widerstandselements für den Strömungssensor, der in diesem Fall nach dem Anemometerprinzip die Strömungsgeschwindigkeit messen kann, der Messwert, das heißt der Widerstandswert, auch von der Temperatur der Luftströmung abhängig ist, ist es zweckmäßig, diese Temperaturbeeinflussung in der Messbrücke zu kompensieren. Hierzu wird derjenige Brückenwiderstand, der in dem zur Sensorschaltung parallelen Brückenzweig liegt und dessen Anordnung der Sensorschaltung entspricht, als in seinem Widerstandswert von der Temperatur abhängig einstellbar ausgebildet. Wenn dann die Messbrücke in dem Betriebszustand, in dem der im wesentlichen durch den Strömungssensor bedingte Spannungsabfall über der Sensorschaltung abgegriffen wird, betrieben wird, kann der in seinem Widerstandsverhalten temperaturabhängig einstellbare Brückenwiderstand auf einen Widerstandswert eingestellt werden, der der in dem vorherigen Betriebszustand ermittelten Temperatur entspricht, wodurch die Temperaturkompensation des Strömungssensor erreicht ist.

Bei Verwendung von temperaturabhängigen Widerstandselementen für die Sensoren der Sensorschaltung ist es zur Erlangung eines zuverlässigen Messsignals für die Strömungsgeschwindigkeit erforderlich, dass die Sensorschaltung über einen vergleichsweise langen Zeitraum in demjenigen Betriebszustand betrieben wird, in dem der Strömungssensor bestromt wird. Denn dieser Strömungssensor arbeitet nunmehr nach dem Anemometerprinzip, was das Abwarten einer Einschwingphase erforderlich macht. Damit ist das zweite Mess-Teilintervall, in dem das die Strömungsgeschwindigkeit repräsentierende Messsignal gewonnen wird, wesentlich länger als das erste Mess-Teilintervall, das der Lieferung des die Lufttemperatur repräsentierenden Messsignal dient. Vorzugsweise beträgt die Dauer des ersten Mess-Teilintervalls ein Drittel bis ein Hundertstel insbesondere ein Zwanzigstel der Dauer des gesamten Messintervalls. Wegen der Einschwingphase sollte der Zeitpunkt, zu dem das von der Sensorschaltung gelieferte Messsignal ausgelesen wird, gegen Ende des zweiten Mess-Teilintervalls liegen.

Es sei an dieser Stelle erwähnt, dass die Einbindung der Sensorschaltung in eine Brückenschaltung in erster Linie dazu dient, um die Brückenschaltung in den beiden Betriebszuständen anhand der Brückenquerspannung zu regeln bzw. zu steuern. Der Regelalgorithmus, der hier eingesetzt wird, arbeitet dergestalt, dass die Brückenquerspannung auf den Wert 0 Volt ausgeregelt wird. Diese Vorgehensweise ist bei NTC-Widerständen, die als Strömungssensoren und Temperatursensoren eingesetzt werden, grundsätzlich bekannt.

Nachfolgend wird die Erfindung anhand der Zeichnung näher erläutert. Im einzelnen zeigen:
- Fig. 1: den vorderen Teils eines PKW mit einer Klimaanlage, wobei die wesentlichen Komponenten dieser Klimaanlage dargestellt sind,
- Fig. 2: eine Möglichkeit der schaltungstechnischen Realisierung der Sensorschaltung mit Steuer- und Auswerteeinheit,
- Fig. 3: ein Diagramm bzgl. des Zeitverlaufs von Strömen und Spannungen gemäß Fig. 2 und
- Fig. 4: eine alternative Sensorschaltung.

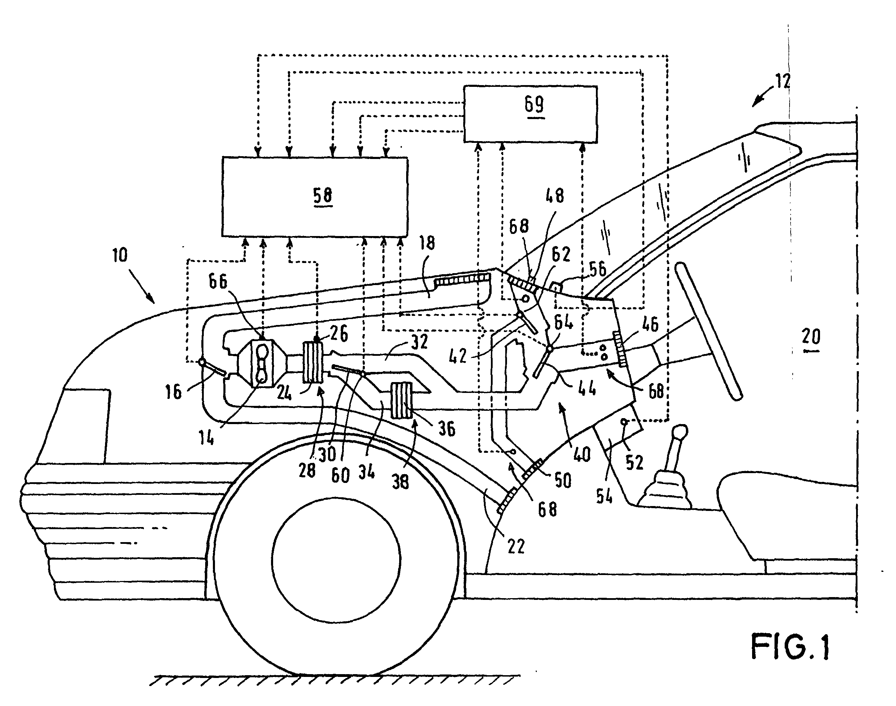

Gemäß Fig. 1 weist eine Klimaanlage 10 für ein Kraftfahrzeug 12 ein Gebläse 14 auf, das in Abhängigkeit von der Stellung einer Frischluft-/Umluftklappe 16 Frischluft aus einem Frischluft-Ansaugkanal 18 oder Umluft aus einem im Innenraum 20 endenden Umluftkanal 22 ansaugt. In Strömungsrichtung betrachtet hinter dem Gebläse 14 befindet sich ein Kompressor 24 zum Abkühlen der Ansaugluft, der ein bei 26 angedeutetes Stellglied zur Veränderung seiner Kühlleistung aufweist. Beim Abkühlen der Ansaugluft wird diese entfeuchtet, weshalb der Kompressor 24 Teil einer Luftentfeuchtungsvorrichtung 28 ist. Die abgekühlte und entfeuchtete Luft gelangt in Abhängigkeit der Stellung einer Mischerklappe 30 in einen von zwei zueinander parallelgeschalteten Kanäle 32,34. Einer dieser beiden Kanäle (im Ausführungsbeispiel der Kanal 34) weist einen Wärmetauscher 36 zum Erwärmen der zuvor abgekühlten Luft auf. Bei der Mischerklappe 30, den beiden Kanälen 32,34 und dem Wärmetauscher 36 handelt es sich um eine luftseitig gesteuerte Luftaufheizvorrichtung 38. Hinter dem Wärmetauscher 36 sind die beiden Kanäle 32,34 wieder zusammengeführt. Im Anschluss daran schließt sich die Luftverteilvorrichtung 40 an, die zwei Luftverteilerklappen 42,44 aufweist, um die Luft wahlweise über die Mannanströmöffnungen 46, die Defrostöffnungen 48 und/oder die Fußraumausströmöffnungen 50 in den Innenraum 20 einzulassen.

Die Steuerung der gesamten Klimaanlage 10 erfolgt dergestalt, dass eine vorgebbare Solltemperatur für den Innenraum 20 erreicht und gehalten wird. Zu diesem Zweck weist die Klimaanlage 10 einen Innenraum-Temperaturfühler 52 auf, der z.B. im Steuerungsgerät 54 untergebracht ist. Ferner ist die Klimaanlage 10 mit mindestens einem Sonnensensor 56 versehen, der die Intensität der Sonneneinstrahlung erfasst. Darüber hinaus weist die Klimaanlage 10 eine weitere Vielzahl von hier nicht näher beschriebenen und in der Zeichnung nicht dargestellten Sensoren für beispielsweise die Außentemperatur, die Kühlwassertemperatur, die Fahrzeuggeschwindigkeit etc. auf. Sämtliche dieser Sensoren sind mit einer zentralen Steuereinheit 58 verbunden, die ihrerseits mit dem Stellglied für den Kompressor 24 sowie mit bei 60,62,64 angedeuteten Stellgliedern für die Klappen 16,42,44 und einem bei 66 angedeuteten Stellglied für das Gebläse 14 verbunden ist.

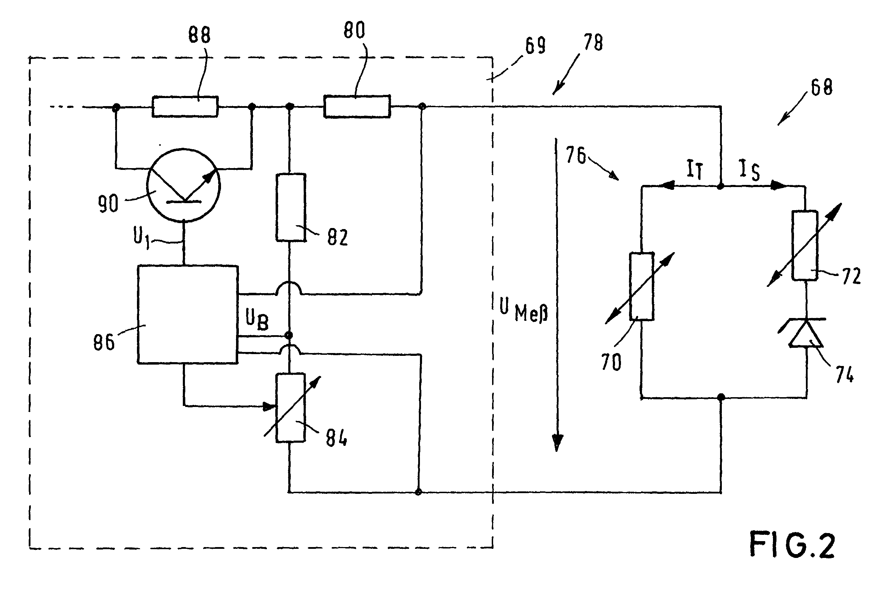

In mindestens einer der drei Gruppen von Auslassöffnungen (Mannanström-, Defrost- und Fußraumausströmöffnungen 46,48,50 ist jeweils eine Sensoreinheit 68 angeordnet, die jeweils als Zweipolschaltungen ausgeführt sind und mit einer Auswerteeinheit 69 elektrisch verbunden sind. Diese Auswerteeinheit 69 fragt jede der Sensoreinheiten 68 zyklisch ab und liefert an die Steuereinheit 58 Ausgabesignale. Mittels jeder Sensoreinheit 68 lassen sich die Temperatur und die Geschwindigkeit der aus der betreffenden Luftausströmöffnung ausströmenden Luft messtechnisch erfassen bzw. errechnen. Der Aufbau einer Sensoreinheit 68 und deren Beschaltung ist in den Fign. 2 bis 4 näher erläutert.

Jede Sensoreinheit 68 weist eine Verschaltung zweier passiver Sensoren 70,72 und eines Umschaltelements 74 gemäß Fig. 2 auf. Bei beiden Sensoren 70,72 handelt es sich um Widerstandselemente mit einem temperaturabhängigen ohmschen Widerstand. Hier kommen insbesondere NTC- und PTC-Widerstandselemente in Frage. Während der Sensor 70 zur Temperaturmessung der aus der betreffenden Auslassöffnungen 46,48,50 eingesetzt wird, wird der Sensor 72 zur Messung der Geschwindigkeit der Luftströmung verwendet. Die Temperatur- und die Strömungsgeschwindigkeitsmessung erfolgen anhand der sich einstellenden Widerstandswerte der beiden Sensoren 70,72.

Das Umschaltelement 74, das eine Knickkennlinie aufweist und demzufolge ab einer bestimmten Durchbruchspannung aus einem Sperrzustand in einen Durchlasszustand übergeht, ist gemäß Fig. 2 mit dem Strömungssensor 72 in Reihe geschaltet. Parallel zu dieser Reihenschaltung liegt der Temperatursensor 70. Die sich darauf ergebende Parallelschaltung 76 (nachfolgend auch Sensorschaltung genannt), ist als elektrische Zweipol-Einheit mit der Auswerteeinheit 69 verbunden. Zur Auswertung der an den Sensoren 70,72 abfallenden Spannungen ist die Sensorschaltung 76 in eine Messbrücke 78 verschaltet, die einen in Reihe mit der Sensorschaltung 76 liegenden ersten Brückenwiderstand 80 sowie eine zu dieser Reihenschaltung parallel geschalteten Reihenschaltung aus einem zweiten und dritten Brückenwiderstand 82,84 aufweist. Der Widerstand des dritten Brückenwiderstandes 84 ist in Abhängigkeit von der Temperatur einstellbar. Eine Auswerteschaltung 86 greift die Brückenspannung U_{B} ab und steuert die Stromzufuhr zur Brückenschaltung 78 in Abhängigkeit dieser Brückenspannung, so dass diese zu Null ausgeregelt wird. Über diese Auswerteschaltung 86 wird der Widerstandswert des dritten Brückenwiderstandes 84 vorgegeben. Bei diesem Brückenwiderstand 84 handelt es sich z.B. um eine Widerstandskaskade oder um eine Schaltungseinheit, die von der Auswerteschaltung derart ansteuerbar ist, dass sie sich im zeitlichen Mittel elektrisch wie ein Widerstand mit einem vorgebbaren ohmschen Widerstand verhält. Die von der Auswerteschaltung 86 abgegriffene Messspannung stellt den Spannungsabfall über der Sensorschaltung dar und liefert die Lufttemperatur und die Strömungsgeschwindigkeit.

Damit die Temperatur und die Strömungsgeschwindigkeit selektiv gemessen werden können, wird die Sensorschaltung 68 in zwei unterschiedlichen Modi betrieben. Hierzu dienen der Vorschaltwiderstand 88 und der dazu parallele und von der Auswerteschaltung 86 ansteuerbare Transistor 90, die beide in der Auswerteeinheit 69 angeordnet sind. Der Widerstand 88 und der Transistor 90 sind in Reihe zur Messbrücke 78 angeordnet. Ist der Transistor 90 im Sperrzustand, so fließt aufgrund des Vorschaltwiderstandes 88 durch die Sensorschaltung 76 ein kleinerer Strom als dann, wenn sich der Transistor 90 im leitenden Zustand befindet. Der kleine Strom führt zu einem lediglich geringen Spannungsausfall über der Sensorschaltung 76, so dass sich das Umschaltelement 74 im Sperrzustand befindet und damit im wesentlichen der gesamte Strom über den Temperatursensor 70 fließt. Jetzt kann durch Abfrage der Messspannung U_{Meß} auf die Temperatur der Luft geschlossen werden.

Im zweiten Betriebsmodus der Sensorschaltung ist der Transistor 90 durch Anlegen einer entsprechenden Steuerspannung U₁ leitend, so dass nun ein größerer Strom fließt. Dieser führt dazu, dass sich das Umschaltelement 74 nun im Durchflusszustand befindet. Die Steuerspannung U₁ wird von der Auswerteschaltung 86 erzeugt, und zwar in Abhängigkeit von der Brückendifferenzspannung U_{B}, die sich wiederum zu Beginn des zweiten Betriebsmodus in Abhängigkeit von dem Widerstand des Temperatursensors 70 und damit in Abhängigkeit von der Temperatur der Luftströmung einstellt. Die Sensorschaltung 68 wird im zweiten Betriebsmodus im Brückenspannungsregelungsmodus betrieben, wobei der Transistor 90 über die Auswerteschaltung 86 derart angesteuert wird, dass die Brückendifferenzspannung zu Null geregelt wird. Werden die Widerstandselemente für die Sensoren 70,72 derart ausgewählt, dass der ohmsche Widerstand des Sensors 70 wesentlich (um mindestens eine Zehnerpotenz) größer ist als der ohmsche Widerstand des Sensors 72, so fließt bei im Durchflusszustand befindlichen Umschaltelement 74 der größere Anteil des Stroms über den Sensor 72. Die sich in diesem Betriebszustand am Ende des Intervalls einstellende Messspannung U_{Meß} ist demzufolge repräsentativ für die Strömungsgeschwindigkeit.

Da beim Stromfluss durch den Sensor 72 dessen Widerstandswert nicht nur durch die Strömungsgeschwindigkeit, sondern auch durch die Temperatur der an dem Sensor 72 vorbeiströmenden Luft bestimmt ist, muss die gesamte Brückenschaltung 78 insoweit korrigiert bzw. kompensiert werden. Dies erfolgt durch den dritten Messbrückenwiderstand 84, dessen Widerstandswert entsprechend der Lufttemperatur, die zuvor mit dem Sensor 70 bei gesperrtem Umschaltelement 74 messtechnisch ermittelt worden ist, durch die Auswerteschaltung 86 eingestellt wird.

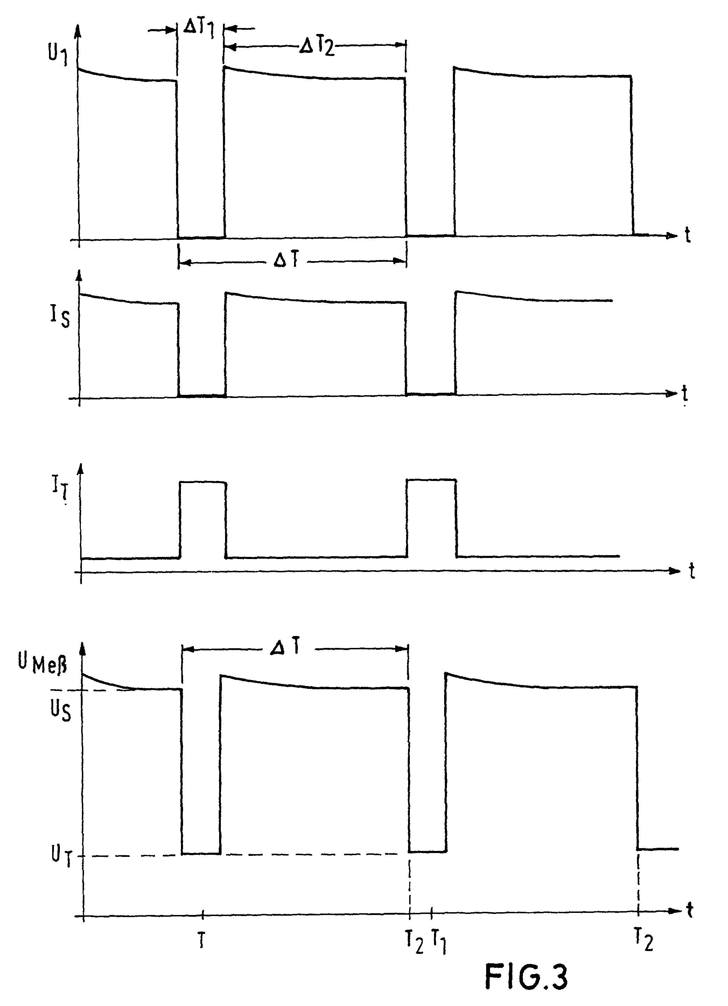

Innerhalb eines Messintervalls ΔT wird also die Sensorschaltung 76 in zwei Modi betrieben. Für ein erstes Teilintervall ΔT₁ ist dabei der Transistor 90 ausgeschaltet, während er für ein zweites Teilintervall ΔT₂ des Messintervalls eingeschaltet ist und als Regler fungiert (siehe die Spannungs- und Stromverläufe der Fig. 3), wobei die Spannungen und Ströme, die in Fig. 3 dargestellt sind, in der Fig. 2 kenntlich gemacht sind. Das zweite Teilintervall ΔT₂ ist dabei wesentlich größer als das erste Teilintervall ΔT₁, da die Strömungsmessung wegen der Aufheizung des Widerstandselements des Sensors 72 über die Umgebungstemperatur längere Zeit in Anspruch nimmt als die Temperaturmessung, bei der der Temperatursensor 70 im wesentlichen wie ein passives Bauelement betrieben wird. Demzufolge wird bei der Strömungsmessung der Sensor 72 aktiv erhitzt und kühlt sich aufgrund der vorbeiströmenden Luft ab, was sich wiederum in seinem Widerstandswert und damit in dem Wert der Messspannung U_{Meß} auswirkt. Der Verlauf der Messspannung U_{Meß} ist im untersten Diagramm von Fig. 3 gezeigt. Auch die Stromverläufe I_{T} und I_{S} durch die beiden Zweige der Sensorschaltung 76 sind dargestellt. Das Auslesen der Messspannung U_{Meß} geschieht zweckmäßigerweise an den in Fig. 3 bei T₁ und T₂ gekennzeichneten Stellen innerhalb eines Messzeitintervalls ΔT, wobei der Messzeitpunkt T₂ möglichst am Ende des Teilintervalls ΔT₂ liegt, da sich dann das System nach der "Störung" durch das Ausschaltung des Transistors 90 wieder eingeschwungen hat. Die zu den beiden Zeitpunkten T₁ und T₂ abgegriffenen Messspannungen U_{T} und U_{S} sind ein Maß für die Temperatur und die Geschwindigkeit der Luftströmung.

Es sei an dieser Stelle klargestellt, dass die Brückenschaltung 78 ausgeregelt sein sollte, um einer Zerstörung der Widerstandselemente der Sensoren 70,72 dann entgegenzuwirken, wenn es sich bei diesen Widerstandselementen um NTC-Widerstände handelt. Dann wird die Brückenschaltung derart angesteuert, dass der Brückenabgleich, also eine Brückenspannung von 0 Volt gegeben ist. Die in beiden Betriebsmodi in die Brückenschaltung 78 einzuspeisende elektrische Energie ist dann das Maß für die Temperatur und die Luftströmungsgeschwindigkeit, und zwar in Form des jeweiligen Spannungsabfalls über der Sensorschaltung 76.

Für jede Sensoreinheit 68 der Klimaanlage 10 ist eine Brückenschaltung 78 gemäß Fig. 2 mit Ansteuerung erforderlich. Da somit messtechnisch ermittelt werden kann, wie viel Energie in den Fahrzeuginnenraum 20 eingebracht wird, ist der Innenraumtemperaturregelkreis auch ohne Positionsrückmeldung der von der Steuereinheit 58 angesteuerten Stellglieder der Klimaanlage 10 geschlossen. Damit kann auf Hardwareseite auf eine beträchtliche Verkabelung und insbesondere auf Rückmeldepotentiometer oder dergleichen verzichtet werden, da die Stellglieder jetzt lediglich noch von der Steuereinheit 58 angesteuert werden, wobei sich die gewünschte Stellung der Stellglieder automatisch einstellt. Der zusätzlich erforderliche Verdrahtungsaufwand für den Anschluss der Sensoreinheiten 60 ist im Vergleich zu Klimaanlagen mit unterlagertem Ausblastemperaturregler minimal, da derartige Regelsysteme bereits über Ausblastemperatursensoren und damit über bis zu den Auslassöffnungen führende Leitungen verfügen. Da für die Ausblasstemperatursensoren der bekannten Klimaanlagen genauso wie für die Sensoreinheit 68 der hier beschriebenen Klimaanlage lediglich zwei Leitungen erforderlich sind, kann ein zusätzlicher Verdrahtungsaufwand allenfalls noch darin bestehen, dass bisher noch nicht mit Ausblastemperatursensoren versehene Luftauslassöffnungen nunmehr noch "verdrahtet" werden müssen.

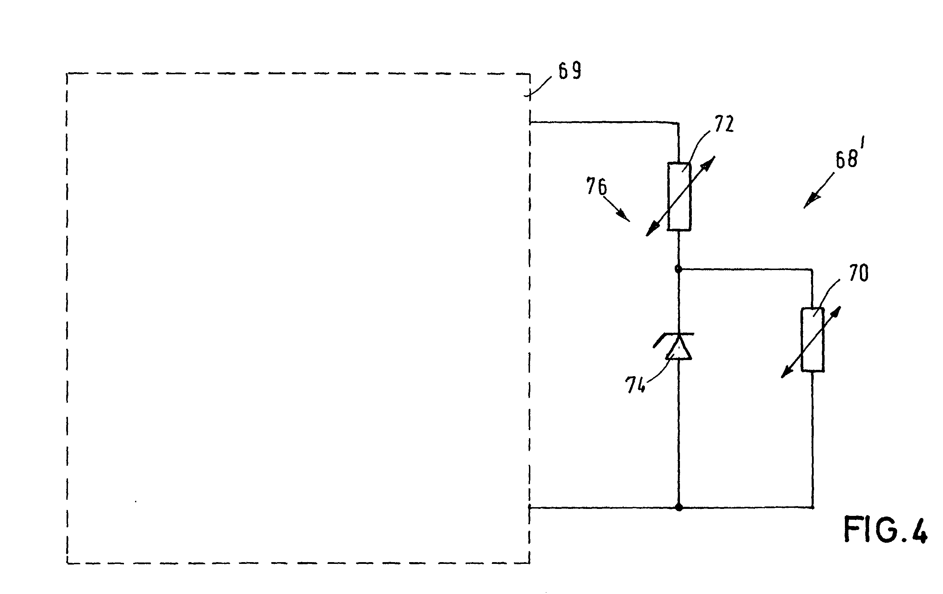

Fig. 4 zeigt eine schaltungstechnische Variante für die Sensoreinheit. Diese alternative Sensoreinheit ist in Fig. 4 mit 68' bezeichnet, wobei die den Elementen der Sensoreinheit 68 der Fig. 2 entsprechenden Sensoren 70,72 und übrigen Schaltungskomponenten mit den gleichen Bezugszeichen wie in Fig. 2 versehen sind. Im Unterschied zur Sensorschaltung 68 weist die Sensorschaltung 68' gemäß Fig. 4 eine Parallelschaltung aus dem Umschaltelement 74 und dem Temperatursensor 70 auf, während der Strömungssensor 72 in Reihe zu dieser Parallelschaltung geschaltet ist. Das Einbinden dieser Sensorschaltung 68' in eine Messbrücke ist ganz entsprechend dem Ausführungsbeispiel gemäß Fig. 2 vorzunehmen. Bei der Auswertung der Messspannungen ist die Verschaltung der Sensoren 70,72 entsprechend zu berücksichtigen. Zu beachten ist hierbei, dass bei der Temperaturmessung auch der Strömungssensor 72 vom Strom durchflossen wird, während bei der Strömungsgeschwindigkeitsmessung aufgrund des Kurzschlusses des Umschaltelements 74, das sich im Durchlassbetrieb befindet, der Temperatursensor 70 "unwirksam" geschaltet ist.

### BEZUGSZEICHENLISTE

- 10: Klimaanlage
- 12: Kraftfahrzeug
- 14: Gebläse
- 16: Frischluft-/Umluftklappe
- 18: Frischluft-Ansaugkanal
- 20: Fahrzeuginnenraum
- 22: Umluftkanal
- 24: Kompressor
- 28: Luftentfeuchtungsvorrichtung
- 30: Mischerklappe
- 32: Kanäle
- 34: Kanäle
- 36: Wärmetauscher
- 38: Luftaufheizvorrichtung
- 42: Luftverteilerklappen
- 44: Luftverteilerklappen
- 46: Mannanströmöffnungen
- 48: Defrostöffnungen
- 50: Fußraumausströmöffnungen
- 52: Innenraum-Temperaturfühler
- 54: Steuerungsgerät
- 56: Sonnensensor
- 58: Steuereinheit
- 60: Stellglied
- 62: Stellglied
- 64: Stellglied
- 68: Sensoreinheit, Sensorschaltung
- 68': Sensorschaltung
- 69: Auswerteeinheit
- 70: Temperatursensor
- 72: Strömungssensor
- 74: Umschaltelement
- 76: Sensorschaltung
- 78: Messbrücke
- 80: erster Brückenwiderstand
- 82: zweiter Brückenwiderstand
- 84: dritter Brückenwiderstand
- 86: Auswerteschaltung
- 88: Vorschaltwiderstand, Widerstand
- 90: Transistor

## Patentansprüche

1. Vorrichtung zur Ermittlung der Temperatur und der Geschwindigkeit der aus einer Luftauslassöffnung in den Innenraum eines Fahrzeuges strömenden Luft, mit
- mindestens einem in der Luftauslassöffnung angeordneten Temperatursensor (70) zur Ermittlung der Temperatur der Luft,
- mindestens einem in der Luftauslassöffnung angeordneten Strömungssensor (72) zur Ermittlung der Strömungsgeschwindigkeit der Luft,
- einer Steuer- und Auswerteeinheit (69), die mit dem mindestens einen Temperatursensor (70) und dem mindestens einen Strömungssensor (72) verbunden ist und diese während eines Messintervalls ansteuert sowie deren Messsignale auswertet, und
- einem elektronischen Umschaltelement (74), das ab einer bauteilspezifischen Durchbruchspannung reversibel aus einem im wesentlichen nichtleitenden Zustand in einen im wesentlichen leitenden Zustand übergeht, wobei
- das Umschaltelement (74) in Reihe mit dem mindestens einen Strömungssensor (72) geschaltet ist,
- parallel zu dieser Reihenschaltung oder parallel zu dem Umschaltelement (74) der mindestens ein Temperatursensor (70) als Sensorschaltung geschaltet ist,
- die Steuer- und Auswerteschaltung (69) diese Sensorschaltung mit über die Dauer eines Messintervalls sich verändernder elektrischer Energie versorgt und die über der Sensorschaltung abfallende Spannung und/oder den durch die Sensorschaltung fließenden Strom zu mindestens zwei Messzeitpunkten ermittelt, wobei mindestens ein Messzeitpunkt innerhalb eines ersten Teils des Messzeitintervalls, in dem die über dem Umschaltelement abfallende Spannung kleiner als die Durchbruchsspannung ist, und mindestens ein Messzeitpunkt innerhalb eines zweiten Teils des Messzeitintervalls liegt, in dem die über dem Umschaltelement abfallende Spannung größer ist als die Durchbruchspannung, und
- die Steuer- und Auswerteeinheit (69) anhand der zu den mindestens zwei Messzeitpunkten vorliegenden Werten für den Spannungsabfall und/oder den Strom ein die Temperatur der Luft repräsentierendes erstes Signal und ein die Geschwindigkeit der Luft repräsentierendes zweites Signal erzeugt.

2. Vorrichtung nach Anspruch 1, **dadurch gekennzeichnet, dass** das Umschaltelement mindestens eine Diode, insbesondere Zenerdiode, oder mindestens einen als Diode geschalteten Transistor aufweist.

3. Vorrichtung nach Anspruch 1 oder 2, **dadurch gekennzeichnet, dass** die Sensorschaltung mehrere Temperatursensoren (70) und/oder mehrere Strömungssensoren (72) aufweist, die jeweils verteilt in der Luftauslassöffnung angeordnet und miteinander verschaltet sind.

4. Vorrichtung nach Anspruch 1 oder 2, **dadurch gekennzeichnet, dass** die Steuer- und Auswerteeinheit (69) drei Brückenwiderstände (80,82,84) aufweist, die mit der Sensorschaltung zu einer Messbrücke verschaltet sind, an die die Steuer- und Auswerteschaltung (69) während der beiden Mess-Teilintervalle eine unterschiedlich große Betriebsspannung anlegt, wobei die Steuer- und Auswerteschaltung (69) zu den beiden Messzeitpunkten anhand des Spannabfalls über der Sensorschaltung die beiden die Temperatur und die Strömungsgeschwindigkeit der Luft repräsentierenden Signale ermittelt.

5. Vorrichtung nach einem der Ansprüche 1 bis 4, **dadurch gekennzeichnet, dass** mindestens der eine Temperatursensor (70) eine insbesondere langgestreckte temperaturempfindliche Fläche aufweist, die der zu messenden Luftströmung ausgesetzt ist.

6. Vorrichtung nach einem der Ansprüche 1 bis 5, **dadurch gekennzeichnet, dass** der mindestens eine Temperatursensor (70) und der mindestens eine Strömungssensor (72) sich um mindestens eine Zehnerpotenz voneinander unterscheidende elektrische Widerstände aufweisen und dass das Umschaltelement mit dem den kleineren elektrischen Widerstand aufweisenden Sensor in Reihe geschaltet ist.

7. Vorrichtung nach einem der Ansprüche 1 bis 5, **dadurch gekennzeichnet, dass** der mindestens eine Temperatursensor (70) ein NTC-Widerstandselement und der mindestens eine Strömungssensor (72) ein NTC-Widerstandselement ist und dass die Steuer- und Auswerteeinheit das die Strömungsgeschwindigkeit der Luft repräsentierende zweite Signal unter Berücksichtigung des zu dem vorherigen ersten Messzeitpunkt oder zu einem der vorherigen ersten Messzeitpunkte ermittelten, die Temperatur der Luft repräsentierenden Signals erzeugt.

8. Vorrichtung nach einem der Ansprüche 1 bis 7, **dadurch gekennzeichnet, dass** die Steuer- und Auswerteeinheit (69) drei Brückenwiderstände (80,82,84) aufweist, die mit der Temperatur-/Strömungssensorschaltung zu einer Messbrücke verschaltet sind, wobei der zu der Sensorschaltung korrespondierende Brückenwiderstand einen in Abhängigkeit von der Lufttemperatur einstellbaren Widerstand aufweist und während des zweiten Mess-Teilintervalls derart von der Steuer- und Auswerteeinheit (69) angesteuert ist, dass er sich wie ein elektrisches Bauteil mit einem der zuvor ermittelten Lufttemperatur entsprechenden ohmschen Widerstand verhält.

9. Vorrichtung nach einem der Ansprüche 1 bis 8, **dadurch gekennzeichnet, dass** das erste Mess-Teilintervall wesentlich kürzer ist als das zweite Mess-Teilintervall.

10. Vorrichtung nach Anspruch 8, **dadurch gekennzeichnet, dass** die Dauer des ersten Mess-Teilintervalls 1/3 bis 1/100 insbesondere 1/20 der Dauer des gesamten Messintervalls beträgt.

11. Vorrichtung nach einem der Ansprüche 1 bis 10, **dadurch gekennzeichnet, dass** der zweite Messzeitpunkt gegen Ende des zweiten Mess-Teilintervalls liegt.

12. Klimaanlage für den Innenraum eines Fahrzeuges mit
- einem Strömungskanalsystem, das ein Gebläse und mindestens eine Lufteinlassöffnung zum Ansaugen von Luft sowie mehrere Luftauslassöffnungen zum Ausblasen von Luft in den Innenraum des Fahrzeuges aufweist,
- einer Luft-Temperiereinheit mit einem ersten Stellglied zur Beeinflussung der Temperatur der durch das Strömungskanalsystem strömenden Luft,
- einer Luftverteilereinheit mit mindestens einem zweiten Stellglied zur Beeinflussung der Verteilung der durch das Strömungskanalsystem strömenden Luft auf mehrere Gruppen von Luftauslassöffnungen, wobei jede Gruppe mindestens eine Luftauslassöffnung aufweist,
- einem Temperatursensor (70) zur Ermittlung der Temperatur im Innenraum des Fahrzeuges,
- einer Auswerte- und Steuereinheit (69), die mit dem Innenraum-Temperaturfühler und positionsrückmeldungsfrei mit den ersten und zweiten Stellgliedern verbunden ist,
- einer Vorrichtung zur Ermittlung der Temperatur und der Geschwindigkeit der aus den Auslassöffnungen strömende Luft, wobei
- die Vorrichtung für jede Gruppe von Auslassöffnungen mindestens eine Sensoreinheit mit einem in einer der Auslassöffnung angeordneten Temperatursensor zur Ermittlung der Temperatur und einen ebenfalls in der Auslassöffnung angeordneten Strömungssensor (72) zur Ermittlung der Geschwindigkeit der aus der betreffenden Auslassöffnung strömenden Luft aufweist und
- die Sensoreinheiten mit der Auswerte- und Steuereinheit (69) verbunden sind,
- wobei jede Sensoreinheit
- ein elektronisches Umschaltelement (74) aufweist, das ab einer bauteilspezifischen Durchbruchspannung reversibel aus einem im wesentlichen nichtleitenden Zustand in einen im wesentlichen leitenden Zustand übergeht,
- das Umschaltelement in Reihe mit dem mindestens einen Strömungssensor (72) geschaltet ist und
- parallel zu dieser Reihenschaltung oder parallel zu dem Umschaltelement der mindestens eine Temperatursensor (70) als Sensorschaltung geschaltet ist, und
- wobei die Steuer- und Auswerteschaltung (69) jede Sensorschaltung mit über die Dauer eines Messintervalls sich verändernder elektrischer Energie versorgt und die über der Sensorschaltung abfallende Spannung und/oder den durch die Sensorschaltung fließenden Strom zu mindestens zwei Messzeitpunkten ermittelt, wobei mindestens ein Messzeitpunkt innerhalb eines ersten Teils des Messzeitintervalls, in dem die über dem Umschaltelement abfallende Spannung kleiner als die Durchbruchspannung ist, und mindestens ein Messzeitpunkt innerhalb eines zweiten Teils des Messzeitintervalls liegt, in dem die über dem Umschaltelement abfallende Spannung größer ist als die Durchbruchspannung, und
- die Steuer- und Auswerteeinheit anhand der zu den mindestens zwei Messzeitpunkten vorliegenden Werten für den Spannungsabfall und/oder den Strom ein die Temperatur der Luft repräsentierendes erstes Signal und ein die Geschwindigkeit der Luft repräsentierendes zweites Signal erzeugt.

13. Klimaanlage nach Anspruch 12, **dadurch gekennzeichnet, dass** die Umschaltelemente der Sensoreinheiten jeweils mindestens eine Diode, insbesondere Zenerdiode oder mindestens einen als Diode geschalteten Transistor aufweisen.

14. Klimaanlage nach Anspruch 12 oder 13, **dadurch gekennzeichnet, dass** jede Sensoreinheit mehrere Temperatursensoren und/oder mehrere Strömungssensoren aufweist, die jeweils verteilt in der betreffenden Luftauslassöffnung angeordnet und miteinander verschaltet sind.

15. Klimaanlage nach einem der Ansprüche 12 bis 14, **dadurch gekennzeichnet, dass** die Steuer- und Auswerteeinheit (69) für jede Sensoreinheit drei Brückenwiderstände (80,82,84) aufweist, die mit der Sensorschaltung zu einer Messbrücke verschaltet sind, an die die Steuer- und Auswerteschaltung während der beiden Mess-Teilintervalle eine unterschiedlich große Betriebsspannung anlegt, wobei die Steuer- und Auswerteeinheit zu den beiden Messzeitpunkten anhand des Spannabfalls über der Sensorschaltung die beiden die Temperatur und die Strömung der Luft repräsentierenden Signale ermittelt.

16. Klimaanlage nach einem der Ansprüche 12 bis 15, **dadurch gekennzeichnet, dass** der mindestens eine Temperatursensor (70) jeder Sensoreinheit eine langgestreckte temperaturempfindliche Fläche aufweist, die der zu messenden Luftströmung ausgesetzt ist.

17. Klimaanlage nach einem der Ansprüche 12 bis 16, **dadurch gekennzeichnet, dass** der mindestens eine Temperatursensor (70) und der mindestens eine Strömungssensor jeder Sensoreinheit sich um mindestens eine Zehnerpotenz voneinander unterscheidende elektrische Widerstände aufweisen und dass das Umschaltelement mit dem den kleineren elektrischen Widerstand aufweisenden Sensor in Reihe geschaltet ist.

18. Klimaanlage nach einem der Ansprüche 12 bis 17, **dadurch gekennzeichnet, dass** der mindestens eine Temperatursensor (70) jeder Sensoreinheit ein NTC-Widerstandselement und der mindestens eine Strömungssensor jeder Sensoreinheit ein NTC-Widerstandselement ist und dass die Steuer- und Auswerteeinheit das die Strömungsgeschwindigkeit der Luft repräsentierende zweite Signal unter Berücksichtigung des zu dem vorherigen ersten Messzeitpunkt oder zu einem der vorherigen ersten Messzeitpunkte ermittelten, die Temperatur der Luft repräsentierenden Signals erzeugt.

19. Klimaanlage nach einem der Ansprüche 12 bis 18, **dadurch gekennzeichnet, dass** die Steuer- und Auswerteeinheit (69) für jede Sensoreinheit drei Brückenwiderstände (80,82,84) aufweist, die mit der Temperatur-/Strömungssensorschaltung zu einer Messbrücke verschaltet sind, wobei der zu der Sensorschaltung korrespondierende Brückenwiderstand einen in Abhängigkeit von der Lufttemperatur einstellbaren Widerstand aufweist und während des zweiten Mess-Teilintervalls derart von der Steuer- und Auswerteeinheit angesteuert ist, dass er sich wie ein elektrisches Bauteil mit einem der zuvor ermittelten Lufttemperatur entsprechenden ohmschen Widerstand verhält.

20. Klimaanlage nach einem der Ansprüche 12 bis 19, **dadurch gekennzeichnet, dass** das erste Mess-Teilintervall wesentlich kürzer ist als das zweite Mess-Teilintervall.

21. Klimaanlage nach Anspruch 20, **dadurch gekennzeichnet, dass** die Dauer des ersten Mess-Teilintervalls 1/3 bis 1/100, insbesondere 1/20 der Dauer des gesamten Messintervalls beträgt.

22. Klimaanlage nach einem der Ansprüche 12 bis 21, **dadurch gekennzeichnet, dass** der zweite Messzeitpunkt gegen Ende des zweiten Mess-Teilintervalls liegt.

## Claims

1. Device for determining the temperature and the velocity of the air flowing from an air outlet opening into the interior of a vehicle, comprising:
- at least one temperature sensor (70) arranged in the air outlet opening for determining the temperature of the air,
- at least one velocity sensor (72) arranged in the air outlet opening for determining the flow velocity of the air,
- a control and evaluation unit (69) connected with the at least one temperature sensor (70) and the at least one velocity sensor (72) and controlling these sensors during a measuring interval and evaluating their measuring signals, and
- an electronic switching element (74) reversibly changing over from an essentially non-conducting state to an essentially conducting state as from a component-specific breakdown voltage, wherein
- the switching element (74) is series-connected with the at least one flow sensor (72),
- parallel to said series-connection or parallel to the switching element (74) the at least one temperature sensor (70) is connected as a sensor circuit,
- the control and evaluation circuit (69) supplies said sensor circuit with electrical energy which changes during the duration of a measuring interval, and determines the voltage dropping over the sensor circuit and/or the current flowing through the sensor circuit at at least two measuring times, wherein at least one measuring time lies within a first segment of the measuring time interval in which the voltage dropping over the switching element is smaller than the breakdown voltage, and at least one measuring point lies within the second segment of the measuring time interval in which the voltage dropping over the switching element is larger than the breakdown voltage, and
- the control and evaluation unit (69) generates, on the basis of the voltage drop and/or current values available at the at least two measuring times, a first signal representing the air temperature and a second signal representing the air velocity.

2. Device according to claim 1, **characterized in that** the switching element comprises at least one diode, in particular a Zener diode, or at least one diode-connected transistor.

3. Device according to claim 1 or 2, **characterized in that** the sensor circuit comprises a plurality of temperature sensors (70) and/or a plurality of flow sensors (72), both types of sensors being distributed in the air outlet opening and being connected to form a circuit.

4. Device according to claim 1 or 2, **characterized in that** the control and evaluation unit (69) comprises three bridge resistors (80,82,84) connected with the sensor circuit to form a measuring bridge to which the control and evaluation unit (69) applies differently high operating voltages during the two measuring interval segments, wherein the control and evaluation unit (69) determines, at the two measuring times and on the basis of the voltage drop over the sensor circuit, the two signals representing the temperature and the flow velocity of the air.

5. Device according to one of claims 1 to 4, **characterized in that** the at least one temperature sensor (70) comprises in particular an elongate temperature-sensitive surface exposed to the air flow to be measured.

6. Device according to one of claims 1 to 5, **characterized in that** the at least one temperature sensor (70) and the at least one flow sensor (72) comprise electrical resistors differing from each other by at least one power of ten, and that the switching element is series-connected with the sensor comprising the smaller electrical resistor.

7. Device according to one of claims 1 to 5, **characterized in that** the at least one temperature sensor (70) is an NTC resistor element and the at least one flow sensor (72) is an NTC resistor element, and that the control and evaluation unit generates the second signal representing the flow velocity of the air, wherein the control and evaluation unit (69) takes into consideration the signal representing the temperature of the air and determined at the previous first measuring time or at one of the previous first measuring times.

8. Device according to one of claims 1 to 7, **characterized in that** the control and evaluation unit (69) comprises three bridge resistors (80,82, 84) which are connected with the temperature/flow sensor circuit to form a measuring bridge, wherein the bridge resistor corresponding to the sensor circuit has a resistance adjustable as a function of the air temperature and is controlled by the control and evaluation unit (69) during the second measuring interval segment such that the bridge resistor corresponding to the sensor circuit behaves like an electrical component with an ohmic resistance corresponding to the previously determined air temperature.

9. Device according to one of claims 1 to 8, **characterized in that** the first measuring interval segment is considerably shorter than the second measuring interval segment.

10. Device according to claim 8, **characterized in that** the duration of the first measuring interval segment amounts to 1/3 to 1/100, in particular 1/20 of the duration of the overall measuring interval.

11. Device according to one of claims 1 to 10, **characterized in that** the second measuring time lies approximately at the end of the second measuring interval segment.

12. Air-conditioning unit for the interior of a vehicle, comprising:
- a flow duct system comprising a fan and at least one air inlet opening for the intake of air and a plurality of air outlet openings for the discharge of air into the interior of a vehicle,
- an air temperature-regulating unit having a first actuator for influencing the temperature of the air flowing through the flow duct system,
- an air distributing unit having at least one second actuator for influencing the distribution of the air flowing through the flow duct system to several groups of air outlet openings, wherein each group comprises at least one air outlet opening,
- a temperature sensor (70) for determining the temperature inside the vehicle,
- a control and evaluation unit (69) connected with the interior-mounted temperature feeler, and connected with the first and second actuators such that no position acknowledgement is issued,
- a device for determining the temperature and the velocity of the air flowing out of the outlet openings, wherein
- the device comprises for each group of outlet openings at least one sensor unit having a temperature sensor arranged in one of the outlet openings for determining the temperature, and a flow sensor (72) also arranged in the outlet opening for determining the velocity of the air flowing out of the respective outlet opening, and
- the sensor units are connected with the control and evaluation unit (69),
- wherein each sensor unit
- comprises an electronic switching element (74) reversibly changing over from an essentially non-conducting state to an essentially conducting state as from a component-specific breakdown voltage,
- the switching element is series-connected with the at least one flow sensor (72), and
- parallel to said series-connection or parallel to the switching element the at least one temperature sensor (70) is connected as a sensor circuit, and
- wherein the control and evaluation circuit (69) supplies said sensor circuit with electrical energy which changes during the duration of a measuring interval, and determines the voltage dropping over the sensor circuit and/or the current flowing through the sensor circuit at at least two measuring times, wherein at least one measuring time lies within a first segment of the measuring time interval in which the voltage dropping over the switching element is smaller than the breakdown voltage, and at least one measuring point lies within the second segment of the measuring time interval in which the voltage dropping over the switching element is larger than the breakdown voltage, and
- the control and evaluation unit generates, on the basis of the voltage drop and/or current values available at the at least two measuring times, a first signal representing the air temperature and a second signal representing the air velocity.

13. Air conditioning unit according to claim 12, **characterized in that** the switching elements of the sensor units each comprise at least one diode, in particular a Zener diode, or at least one diode-connected transistor.

14. Air conditioning unit according to claim 12 or 13, **characterized in that** the sensor circuit comprises a plurality of temperature sensors and/or a plurality of flow sensors, both types of sensors being distributed in the air outlet opening and being connected to form a circuit.

15. Air conditioning unit according to one of claims 12 to 14, **characterized in that** the control and evaluation unit (69) comprises, for each sensor unit, three bridge resistors (80,82,84) connected with the sensor circuit to form a measuring bridge to which the control and evaluation unit applies differently high operating voltages during the two measuring interval segments, wherein the control and evaluation unit determines, at the two measuring times and on the basis of the voltage drop over the sensor circuit, the two signals representing the temperature and the flow velocity of the air.

16. Air conditioning unit according to one of claims 12 to 15, **characterized in that** the at least one temperature sensor (70) of each sensor unit comprises an elongate temperature-sensitive surface exposed to the air flow to be measured.

17. Air conditioning unit according to one of claims 12 to 16, **characterized in that** the at least one temperature sensor (70) and the at least one flow sensor of each sensor unit comprise electrical resistors differing from each other by at least one power of ten, and that the switching element is series-connected with the sensor comprising the smaller electrical resistor.

18. Air conditioning unit according to one of claims 12 to 17, **characterized in that** the at least one temperature sensor (70) of each sensor unit is an NTC resistor element and the at least one flow sensor (72) of each sensor unit is an NTC resistor element, and that the control and evaluation unit generates the second signal representing the flow velocity of the air, wherein the control and evaluation unit takes into consideration the signal representing the temperature of the air and determined at the previous first measuring time or at one of the previous first measuring times.

19. Air conditioning unit according to one of claims 12 to 18, **characterized in that** the control and evaluation unit (69) comprises, for each sensor unit, three bridge resistors (80,82,84) which are connected with the temperature/flow sensor circuit to form a measuring bridge, wherein the bridge resistor corresponding to the sensor circuit has a resistance adjustable as a function of the air temperature and is controlled by the control and evaluation unit during the second measuring interval segment such that the bridge resistor corresponding to the sensor circuit behaves like an electrical component with an ohmic resistance corresponding to the previously determined air temperature.

20. Air conditioning unit according to one of claims 12 to 19, **characterized in that** the first measuring interval segment is considerably shorter than the second measuring interval segment.

21. Air conditioning unit according to claim 20, **characterized in that** the duration of the first measuring interval segment amounts to 1/3 to 1/100, in particular 1/20 of the duration of the overall measuring interval.

22. Air conditioning unit according to one of claims 12 to 21, **characterized in that** the second measuring time lies approximately at the end of the second measuring interval segment.

## Revendications

1. Dispositif pour déterminer la température et la vitesse de l'air s'écoulant d'une ouverture de sortie d'air dans l'habitacle intérieur d'un véhicule, comprenant :
- au moins un capteur de température (70) disposé dans l'ouverture de sortie d'air et destiné à déterminer la température de l'air,
- au moins un capteur d'écoulement (72) disposé dans l'ouverture de sortie d'air et destiné à déterminer la vitesse d'écoulement de l'air,
- une unité de commande et de traitement (69) qui est reliée audit au moins un capteur de température (70) et audit au moins un capteur d'écoulement (72), et qui, durant un intervalle de mesure, commande ceux-ci et traite leurs signaux de mesure,
- un élément de commutation électronique (74), qui, à partir d'une tension de claquage spécifique au composant, commute de manière réversible d'un état sensiblement non conducteur à un état sensiblement conducteur,
le dispositif se présentant de la manière suivante à savoir que
- l'élément de commutation (74) est monté en série avec ledit au moins un capteur d'écoulement (72),
- en parallèle avec ce circuit série ou en parallèle avec l'élément de commutation (74), est monté ledit au moins un capteur de température (70), en tant que circuit de capteurs,
- le circuit de commande et de traitement (69) alimente ce circuit de capteurs avec une énergie électrique variant sur la durée d'un intervalle de mesure, et détermine, à au moins deux instants de mesure, la tension chutant par le circuit de capteurs et/ou le courant circulant à travers le circuit de capteurs, au moins un instant de mesure se situant à l'intérieur d'une première partie de l'intervalle de temps de mesure dans laquelle la tension chutant par l'élément de commutation est inférieure à la tension de claquage, et au moins un instant de mesure se situant à l'intérieur d'une seconde partie de l'intervalle de temps de mesure dans laquelle la tension chutant par l'élément de commutation est supérieure à la tension de claquage, et
- l'unité de commande et de traitement (69), à l'aide des valeurs pour la chute de tension et/ou le courant disponibles pour lesdits au moins deux instants de mesure, élabore un premier signal représentant la température de l'air et un second signal représentant la vitesse de l'air.

2. Dispositif selon la revendication 1, **caractérisé en ce que** l'élément de commutation comprend au moins une diode, notamment une diode Zener, ou au moins un transistor monté en diode.

3. Dispositif selon la revendication 1 ou 2, **caractérisé en ce que** le circuit de capteurs comprend plusieurs capteurs de température (70) et/ou plusieurs capteurs d'écoulement (72), qui sont respectivement disposés en étant répartis dans l'ouverture de sortie d'air et en étant mutuellement en circuit.

4. Dispositif selon la revendication 1, **caractérisé en ce que** l'unité de commande et de traitement (69) comprend trois résistances de pont (80, 82, 84) qui, avec le circuit de capteurs, sont montées en un pont de mesure auquel le circuit de commande et de traitement (69) applique une tension de fonctionnement de grandeur différente pendant les deux intervalles partiels de mesure, le circuit de commande et de traitement (69) déterminant aux deux instants de mesure et au regard de la chute de tension par le circuit de capteurs, les deux signaux représentant la température et la vitesse d'écoulement de l'air.

5. Dispositif selon l'une des revendications 1 à 4, **caractérisé en ce que** ledit au moins un capteur de température (70) présente une surface sensible à la température notamment allongée, qui est exposée à l'écoulement d'air à mesurer.

6. Dispositif selon l'une des revendications 1 à 5, **caractérisé en ce que** ledit au moins un capteur de température (70) et ledit au moins un capteur d'écoulement (72) présentent des résistances électriques différentes l'une de l'autre d'au moins une puissance de dix, et **en ce que** l'élément de commutation est monté en série avec le capteur présentant la résistance électrique la plus petite.

7. Dispositif selon l'une des revendications 1 à 5, **caractérisé en ce que** ledit au moins un capteur de température (70) est un élément de résistance NTC (à coefficient de température négatif) et ledit au moins un capteur d'écoulement (72) est un élément de résistance NTC, et **en ce que** l'unité de commande et de traitement élabore le second signal représentant la vitesse d'écoulement de l'air, en tenant compte du signal représentant la température de l'air déterminé au premier instant de mesure précédent ou à l'un des premiers instants de mesure précédents.

8. Dispositif selon l'une des revendications 1 à 7, **caractérisé en ce que** l'unité de commande et de traitement (69) comprend trois résistances de pont (80, 82, 84) qui, avec le circuit de capteurs de température/d'écoulement, sont montées en un pont de mesure, la résistance de pont correspondant au circuit de capteurs présentant une résistance réglable en fonction de la température de l'air et étant pilotée durant le second intervalle partiel de mesure, par l'unité de commande et de traitement (69), de façon telle qu'elle se comporte comme un composant électrique avec une résistance ohmique correspondant à la température de l'air déterminée précédemment.

9. Dispositif selon l'une des revendications 1 à 8, **caractérisé en ce que** le premier intervalle partiel de mesure est sensiblement plus court que le second intervalle partiel de mesure.

10. Dispositif selon la revendication 8, **caractérisé en ce que** la durée du premier intervalle partiel de mesure vaut 1/3 à 1/100, notamment 1/20 de la durée de l'ensemble de l'intervalle de mesure.

11. Dispositif selon l'une des revendications 1 à 10, **caractérisé en ce que** le second instant de mesure se situe vers la fin du second intervalle partiel de mesure.

12. Installation de climatisation pour l'habitacle intérieur d'un véhicule comprenant :
- un système de canaux d'écoulement, qui comprend un ventilateur et au moins une ouverture d'entrée d'air destinée à l'aspiration d'air, ainsi que plusieurs ouvertures de sortie d'air destinées au soufflage d'air dans l'habitacle intérieur du véhicule,
- une unité pour tempérer l'air, comprenant un premier organe de réglage pour influencer la température de l'air s'écoulant à travers le système de canaux d'écoulement,
- une unité de répartition de l'air comprenant au moins un second organe de réglage pour influencer la répartition de l'air s'écoulant à travers le système de canaux d'écoulement vers plusieurs groupes d'ouvertures de sortie d'air, chaque groupe présentant au moins une ouverture de sortie d'air,
- un capteur de température (70) pour déterminer la température dans l'habitacle intérieur du véhicule,
- une unité de traitement et de commande (69) qui est reliée à la sonde de température de l'habitacle intérieur et aux premiers et seconds organes de réglage sans signal de retour de position,
- un dispositif pour déterminer la température et la vitesse de l'air s'écoulant des ouvertures de sortie d'air,
l'installation de climatisation étant conçue de la manière suivante, à savoir que
- ledit dispositif comprend pour chaque groupe d'ouvertures de sortie, au moins une unité de capteurs avec un capteur de température disposé dans une ouverture de sortie et destiné à déterminer la température, et un capteur d'écoulement (72) également disposé dans l'ouverture de sortie et destiné à déterminer la vitesse de l'air s'écoulant de l'ouverture de sortie considérée, et
- les unités de capteurs sont reliées à l'unité de traitement et de commande (69),
- chaque unité de capteurs
- comporte un élément de commutation électronique (74), qui, à partir d'une tension de claquage spécifique au composant, commute de manière réversible d'un état sensiblement non conducteur à un état sensiblement conducteur,
- l'élément de commutation est monté en série avec ledit au moins un capteur d'écoulement (72),
- en parallèle avec ce circuit série ou en parallèle avec l'élément de commutation est monté ledit au moins un capteur de température (70) en tant que circuit de capteurs,
- le circuit de commande et de traitement (69) alimente chaque circuit de capteurs avec une énergie électrique variant sur la durée d'un intervalle de mesure, et détermine, à au moins deux instants de mesure, la tension chutant par le circuit de capteurs et/ou le courant circulant à travers le circuit de capteurs, au moins un instant de mesure se situant à l'intérieur d'une première partie de l'intervalle de temps de mesure dans laquelle la tension chutant par l'élément de commutation est inférieure à la tension de claquage, et au moins un instant de mesure se situant à l'intérieur d'une seconde partie de l'intervalle de temps de mesure dans laquelle la tension chutant par l'élément de commutation est supérieure à la tension de claquage, et
- l'unité de commande et de traitement, à l'aide des valeurs pour la chute de tension et/ou le courant disponibles pour lesdits au moins deux instants de mesure, élabore un premier signal représentant la température de l'air et un second signal représentant la vitesse de l'air.

13. Installation de climatisation selon la revendication 12, **caractérisée en ce que** les éléments de commutation des unités de capteurs comprennent chacun au moins une diode, notamment une diode Zener, ou au moins un transistor monté en diode.

14. Installation de climatisation selon la revendication 12 ou 13, **caractérisée en ce que** chaque unité de capteurs comprend plusieurs capteurs de température et/ou plusieurs capteurs d'écoulement, qui sont respectivement disposés en étant répartis dans l'ouverture de sortie d'air considérée et en étant mutuellement en circuit.

15. Installation de climatisation selon l'une des revendications 12 à 14, **caractérisée en ce que** l'unité de commande et de traitement (69) comprend pour chaque unité de capteurs, trois résistances de pont (80, 82, 84) qui, avec le circuit de capteurs, sont montées en un pont de mesure auquel le circuit de commande et de traitement applique une tension de fonctionnement de grandeur différente pendant les deux intervalles partiels de mesure, l'unité de commande et de traitement déterminant aux deux instants de mesure et au regard de la chute de tension par le circuit de capteurs, les deux signaux représentant la température et la vitesse d'écoulement de l'air.

16. Installation de climatisation selon l'une des revendications 12 à 15, **caractérisée en ce que** ledit au moins un capteur de température (70) de chaque unité de capteurs, présente une surface sensible à la température, allongée, qui est exposée à l'écoulement d'air à mesurer.

17. Installation de climatisation selon l'une des revendications 12 à 16, **caractérisée en ce que** ledit au moins un capteur de température (70) et ledit au moins un capteur d'écoulement de chaque unité de capteurs présentent des résistances électriques différentes l'une de l'autre d'au moins une puissance de dix, et **en ce que** l'élément de commutation est monté en série avec le capteur présentant la résistance électrique la plus petite.

18. Installation de climatisation selon l'une des revendications 12 à 17, **caractérisée en ce que** ledit au moins un capteur de température (70) de chaque unité de capteurs est un élément de résistance NTC (à coefficient de température négatif) et ledit au moins un capteur d'écoulement de chaque unité de capteurs est un élément de résistance NTC, et **en ce que** l'unité de commande et de traitement élabore le second signal représentant la vitesse d'écoulement de l'air, en tenant compte du signal représentant la température de l'air déterminé au premier instant de mesure précédent ou à l'un des premiers instants de mesure précédents.

19. Installation de climatisation selon l'une des revendications 12 à 18, **caractérisée en ce que** l'unité de commande et de traitement (69) comprend pour chaque unité de capteurs, trois résistances de pont (80, 82, 84) qui, avec le circuit de capteurs de température/d'écoulement, sont montées en un pont de mesure, la résistance de pont correspondant au circuit de capteurs présentant une résistance réglable en fonction de la température de l'air et étant pilotée durant le second intervalle partiel de mesure, par l'unité de commande et de traitement, de façon telle qu'elle se comporte comme un composant électrique avec une résistance ohmique correspondant à la température de l'air déterminée précédemment.

20. Installation de climatisation selon l'une des revendications 12 à 19, **caractérisée en ce que** le premier intervalle partiel de mesure est sensiblement plus court que le second intervalle partiel de mesure.

21. Installation de climatisation selon l'une des revendications 12 à 20, **caractérisée en ce que** la durée du premier intervalle partiel de mesure vaut 1/3 à 1/100, notamment 1/20 de la durée de l'ensemble de l'intervalle de mesure.

22. Installation de climatisation selon l'une des revendications 12 à 21, **caractérisée en ce que** le second instant de mesure se situe vers la fin du second intervalle partiel de mesure.
